# EUROPÄISCHE PATENTSCHRIFT

(11) **EP 3 219 529 B1**
(45) Veröffentlichungstag und Bekanntmachung des Hinweises auf die Patenterteilung: **23.05.2018**
(21) Anmeldenummer: 16160642.1
(22) Anmeldetag: 16.03.2016
(51) Int. Cl.: B60J 10/32, B60J 10/35, B60J 10/70

(54) **PROFILLEISTENANORDNUNG**
PROFILE STRIP ARRANGEMENT
SYSTEME DE MOULURAGE

(43) Veröffentlichungstag der Anmeldung: 20.09.2017
(73) Patentinhaber: Elkamet Kunststofftechnik GmbH, 35216 Biedenkopf (DE)
(72) Erfinder: Schoch, Andreas, 35075 Gladenbach (DE)
(74) Vertreter: DREISS Patentanwälte PartG mbB

(56) Entgegenhaltungen:
- EP-A2- 0 076 924
- DE-A1-102009 010 015
- DE-U1-202014 106 204
- GB-A- 2 093 106
- US-A- 4 505 965

## Beschreibung

Die Erfindung betrifft eine Profilleistenanordnung mit den Merkmalen des Oberbegriffs des Patentanspruchs 1.

Profilleistenanordnungen der vorgenannten Art sind beispielsweise aus der DE 20 2008 013 133 U1 bekannt. Diese Druckschrift schlägt vor, zur Befestigung der Profilleiste an einer rückseitigen Oberfläche der Windschutzscheibe einen Verbindungsstreifen zu verwenden, der eine einfache, schnelle und kostengünstige Verbindung schaffen soll. Als Verbindungsstreifen kommt beispielsweise ein auch aus der DE 10 2012 112 663 A1 bekanntes doppelseitiges Klebeband in Betracht.

Eine Weiterbildung ist aus der DE 10 2008 003 252 A1 bekannt. Diese sieht vor, zusätzlich zu einem doppelseitigen Klebeband einen im fließfähigen Zustand aufgebrachten Klebstoffabschnitt zu verwenden, um eine möglichst steife Verbindung zwischen einer Profilleiste und einer Windschutzscheibe herzustellen.

Eine andere Weiterbildung ist aus der DE 10 2012 112 674 A1 bekannt. Diese sieht vor, ein doppelseitiges Klebeband im Bereich einer Stirnkante stoffschlüssig mit einer zusätzlichen Klebstoffraupe zu verbinden, um einem Abschälen des Klebebands entgegenzuwirken.

Eine Profilanordnung mit den Merkmalen des Oberbegriffs des Patentanspruchs 1 ist aus der DE 10 2009 010 015 A1 bekannt.

Die DE 20 2014 106 204 U1 betrifft eine Abdichtungsanordnung mit einer metallischen Verstärkungseinlage, die auf einer dem Randbereich einer Windschutzscheibe abgewandten Seite anordnet ist und auf der dem Randbereich der Windschutzscheibe zugewandten Seite an eine Kunststoff-Profilleiste angrenzt, die ihrerseits mit dem Randbereich der Windschutzscheibe verbunden ist.

Aus der EP 0 076 924 A2 ist ein Dichtungs- und Halteprofil bekannt, welches einen Scheibenrand eines Fensters abdichtend umschließt, wobei das Profil den umlaufenden Scheibenrand einstückig umschließend als Baueinheit mit diesem ausgebildet und unmittelbar an den Scheibenrand festhaftend angeformt ist. Ferner ist aus der GB 2 093 106 A eine Struktur zur Befestigung einer Windschutzscheibe an einem Kraftfahrzeug bekannt, bei welcher ein festes Rahmenteil an den umlaufenden Scheibenrand der Windschutzscheibe befestigt wird, wobei ein Dichtungskörper vorgesehen ist, der zur formschlüssigen Umgreifung des festen Rahmenteils dient und ferner formschlüssig mit einem Karosserieflansch verbunden ist.

Die vorstehend genannten Konstruktionen haben sich in der Praxis als zu teuer erwiesen. Hiervon ausgehend liegt der vorliegenden Erfindung die Aufgabe zugrunde, eine Profilleistenanordnung der eingangs genannten Art so zu verbessern, dass sie preiswert herstellbar ist.

Diese Aufgabe wird erfindungsgemäß dadurch gelöst, dass der freie Oberflächenabschnitt des ersten Verbindungsbereichs der Profilleiste durch die Oberfläche eines aus Metall bestehenden Zusatzelements oder durch die Oberfläche einer Beschichtung des Zusatzelements gebildet ist.

Erfindungsgemäß wird in dem ersten Verbindungsbereich ein Oberflächenabschnitt bereitgehalten, der frei ist von Profilmaterial. Bei dem Profilmaterial handelt es sich in an sich bekannter Weise um ein Kunststoffmaterial, beispielsweise um Polyvinylchlorid (PVC), Blends aus Polyvinylchlorid und Poly(acrylnitril-co-butadien-co-styrol) (PVC/ABS) oder um Polypropylen (PP). Insbesondere Polypropylen hat sich bei Profilleistenanordnungen als robust und beständig erwiesen. Das Profilmaterial weist jedoch keine optimalen Eigenschaften auf für eine stoffschlüssige Verbindung mit der Windschutzscheibe bzw. mit zwischenliegenden Verbindungsschichten.

Erfindungsgemäß wird in dem Bereich des von dem Profilmaterial freien Oberflächenabschnitts eine Oberfläche bereitgestellt, welche aus einem anderen Material besteht. Der Träger dieser aus einem anderen Material bestehenden Oberfläche ist ein Zusatzelement aus Metall.

Bei dem Zusatzelement handelt es sich insbesondere um einen Flachkörper, der zumindest in Teilbereichen des ersten Verbindungsbereichs angeordnet ist.

Erfindungsgemäß besteht das Zusatzelement aus Metall, insbesondere aus Stahl oder aus einer Stahllegierung oder aus Aluminium oder aus einer Aluminiumlegierung. Ein solches metallisches Zusatzelement weist im Vergleich zu dem Profilmaterial verbesserte Hafteigenschaften auf.

Es ist möglich, dass die Oberfläche des Zusatzelements diejenige Oberfläche ist, die in dem Bereich des von dem Profilmaterial freien Oberflächenabschnitts angeordnet ist. Es ist aber auch möglich, dass das Zusatzelement beschichtet ist; in diesem Fall ist der von dem Profilmaterial freie Oberflächenabschnitt durch eine Oberfläche gebildet, die aus dem Beschichtungsmaterial hergestellt ist und die von dem Zusatzelement getragen wird. Bei der Beschichtung kann es sich beispielsweise um eine Schutz- oder Haftvermittlerschicht handeln.

Um eine einfache und belastbare Verbindung zwischen dem ersten Verbindungsbereich der Profilleiste und dem Randbereich der Windschutzscheibe zu erzielen, ist es bevorzugt, dass der erste Verbindungsbereich einen unteren Verbindungsabschnitt aufweist, der mit einer Innenseite des Randbereichs der Windschutzscheibe zusammenwirkt, und/oder dass der erste Verbindungsbereich einen seitlichen Verbindungsabschnitt aufweist, der mit einer Stirnseite des Randbereichs der Windschutzscheibe zusammenwirkt, und/oder dass der erste Verbindungsbereich einen oberen Verbindungsabschnitt aufweist, der mit einer Außenseite des Randbereichs der Windschutzscheibe zusammenwirkt, und dass der mindestens eine freie Oberflächenabschnitt an dem unteren Verbindungsabschnitt und/oder dem seitlichen Verbindungsabschnitt und/oder dem oberen Verbindungsabschnitt angeordnet ist. Bei einer bevorzugten Ausführungsform ist zumindest ein unterer Verbindungsabschnitt vorgesehen, der mit der Innenseite des Randbereichs der Windschutzscheibe zusammenwirkt. Dieser untere Verbindungsabschnitt schafft die Möglichkeit einer vergleichsweise großflächigen und stabilen Verbindung zwischen der Profilleiste und der Innenseite des Randbereichs der Windschutzscheibe.

Zusätzlich oder alternativ hierzu ist es aber auch möglich, dass ein freier Oberflächenabschnitt an einem seitlichen Verbindungsabschnitt des ersten Verbindungsbereichs vorgesehen ist.

Ein oberer Verbindungsabschnitt eines ersten Verbindungsbereichs ist insbesondere bei Profilleisten vorgesehen, welche eine sogenannte U-förmige Anbindung der Profilleiste an den Randbereich der Windschutzscheibe aufweisen. Bei dieser U-förmigen Anbindung sind sowohl ein unterer Verbindungsabschnitt als auch ein seitlicher Verbindungsabschnitt als auch ein oberer Verbindungsabschnitt vorgesehen, wobei der untere Verbindungsabschnitt und der obere Verbindungsabschnitt die Schenkel eines "U" bilden und den Randbereich der Windschutzscheibe umgreifen.

Eine besonders einfache und kompakte Verbindungsmöglichkeit zwischen der Profilleiste und der Windschutzscheibe ergibt sich dadurch, dass der freie Oberflächenabschnitt dem Randbereich der Windschutzscheibe zugewandt ist.

Die erfindungsgemäße Profilleistenanordnung eignet sich insbesondere für Profilleisten, welche im zweiten Verbindungsbereich einen im Profil U- oder V-förmigen Aufnahmeraum zur Aufnahme eines Rastelements der an die Windschutzscheibe angrenzenden Wasserkastenabdeckung aufweisen. Derartige zweite Verbindungsbereiche sind beispielsweise bekannt aus EP 2 123 497 A1.

Es ist möglich, dass das Zusatzelement lediglich in dem ersten Verbindungsbereich angeordnet ist und sich dort ausschließlich in dem freien Oberflächenabschnitt erstreckt. Auf diese Weise genügt ein vergleichsweise kleines und sehr einfach herstellbares Zusatzelement, um bessere Voraussetzungen für eine stoffschlüssige Verbindung des Profilmaterials mit der Windschutzscheibe zu schaffen.

Es kann aber auch bevorzugt sein, dass in dem Bereich eines Teilabschnitts des Zusatzelements dieses sowohl auf seiner Unterseite als auch auf seiner Oberseite mit Profilmaterial bedeckt ist. Ein solches Zusatzelement weist also mindestens einen Teilbereich auf, in welchem das Zusatzelement in dem Profilmaterial der Profilleiste verankert ist.

Bei dem genannten Teilabschnitt kann es sich insbesondere um ein freies Ende des Zusatzelements und/oder einen dem zweiten Verbindungsbereich zugewandten Abschnitt des Zusatzelements handeln. Hierdurch ist das Zusatzelement optimal gegen eine Ablösung von dem Profilmaterial geschützt.

Bei einer weiteren bevorzugten Ausführungsform der Erfindung ist vorgesehen, dass die Profilleiste einen zentralen Abschnitt aufweist, der den ersten Verbindungsbereich und den zweiten Verbindungsbereich miteinander verbindet, und dass das Zusatzelement im Bereich des zentralen Abschnitts Durchbrüche aufweist, insbesondere in Form einer Perforierung. Dies ermöglicht eine weiter optimierte Verankerung des Zusatzelements in dem Profilmaterial der Profilleiste.

Bei einer besonders bevorzugten Ausführungsform ist vorgesehen, dass das Zusatzelement durch eine Versteifungseinlage gebildet ist, welche die Profilleiste versteift. Hierbei handelt es sich insbesondere um Folien oder Bleche, welche aus Metall hergestellt sind, insbesondere aus Stahl oder aus einer Stahllegierung oder aus Aluminium oder aus einer Aluminiumlegierung. Die Nutzung der Versteifungseinlage als Zusatzelement durch Freilegung der Oberfläche einer Versteifungseinlage in dem ersten Verbindungsbereich ermöglicht eine besonders einfache und preiswerte Herstellung einer Profilleistenanordnung.

Für eine stoffschlüssige Verbindung des ersten Verbindungsbereichs mit der Windschutzscheibe ist vorgesehen, dass zumindest ein Teilbereich des freien Oberflächenabschnitts von einem Klebeabschnitt überdeckt ist, der zur Klebeverbindung mit dem Randbereich der Windschutzscheibe dient. Es ist möglich, dass es sich bei dem Klebeabschnitt um ein fließfähiges Klebematerial handelt, welches auf die Oberfläche des Zusatzelements aufgetragen wird, um dann mit dem Randbereich der Windschutzscheibe verbunden zu werden.

Der Klebeabschnitt ist durch ein doppelseitiges Klebeband gebildet. Durch die erfindungsgemäße Freilegung eines Oberflächenabschnitts, in welchem kein Profilmaterial angeordnet ist, können in diesem Bereich Klebebänder verwendet werden, deren Hafteigenschaften lediglich im Hinblick auf die Oberfläche des Zusatzelements und im Hinblick auf den Randbereich der Windschutzscheibe optimiert werden müssen, nicht jedoch im Hinblick auf eine Haftfähigkeit mit dem Profilmaterial der Profilleiste. Auf diese Weise ist es möglich, einfache und preisgünstige Klebebänder zu verwenden.

Bei einem Verfahren zur preiswerten Herstellung einer vorstehend beschriebene Profilleistenanordnung werden die Profilleiste und das Zusatzelement voneinander unabhängig hergestellt und anschließend miteinander verbunden, insbesondere miteinander verklebt und/oder verpresst.

Bei einem weiteren Verfahren zur preiswerten Herstellung einer vorstehend beschriebene Profilleistenanordnung wird das Profilmaterial der Profilleiste extrudiert, wobei das Zusatzelement während der Extrusion des Profilmaterials zugeführt wird und wobei das Profilmaterial in einem mit dem Zusatzelement zumindest abschnittsweise verbundenen Zustand erstarrt.

Eine voneinander unabhängige Herstellung von Profilleiste und Zusatzelement und eine anschließende Verbindung dieser Bauteile eignet sich insbesondere für Profilleistenanordnungen, bei welchen sich das Zusatzelement ausschließlich in dem freien Oberflächenabschnitt erstreckt.

Wenn das Zusatzelement während der Extrusion des Profilmaterials zugeführt wird, handelt es sich bei dem Zusatzelement um einen insbesondere profilierten Endlosstrang aus metallischem Material, wobei der Endlosstrang zusammen mit dem Profilmaterial die Extrusionsdüse durchläuft, sodass sowohl das Zusatzelement als auch die Profilleiste gemeinsam miteinander in einem Endlosverfahren hergestellt werden können.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine Seitenansicht einer ersten Ausführungsform einer Profilleistenanordnung, umfassend eine Profilleiste mit einem Zusatzelement;
- Fig. 2: die Profilleistenanordnung gemäß Fig. 1, zusätzlich umfassend einen Klebeabschnitt;
- Fig. 3: die Profilleistenanordnung gemäß Fig. 2, zusätzlich umfassend eine Windschutzscheibe;
- Fig. 4: eine Seitenansicht einer weiteren Ausführungsform einer Profilleistenanordnung, umfassend mindestens ein Zusatzelement in Form einer Versteifungseinlage;
- Fig. 5: eine Seitenansicht einer weiteren Ausführungsform einer Profilleistenanordnung;
- Fig. 6: eine Seitenansicht einer weiteren Ausführungsform einer Profilleistenanordnung;
- Fig. 7: eine perspektivische Ansicht einer Versteifungseinlage der Profilleistenanordnung gemäß Fig. 6;
- Fig. 8: eine Seitenansicht einer weiteren Ausführungsform einer Profilleistenanordnung; und
- Fig. 9: eine Seitenansicht einer weiteren Ausführungsform einer Profilleistenanordnung, mit einer Profilleiste, die einen U-förmig ausgebildeten ersten Verbindungsabschnitt aufweist.

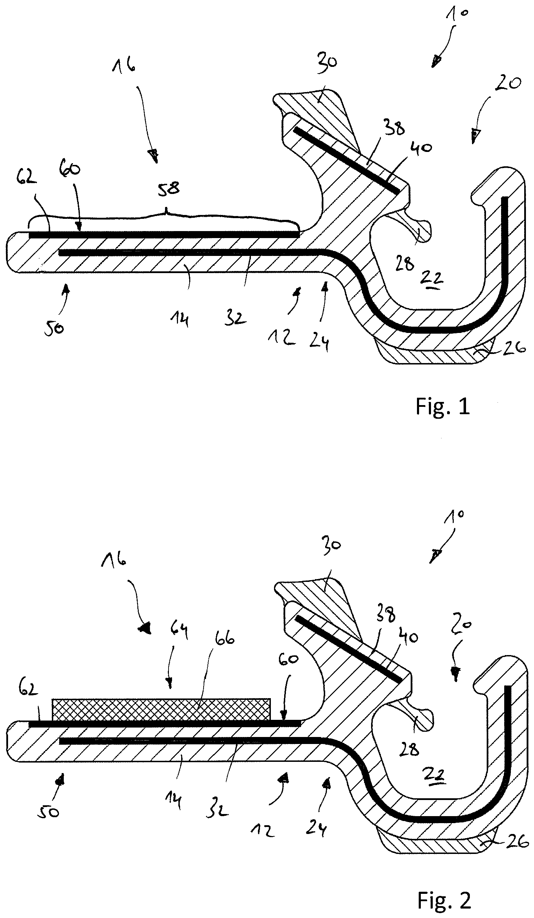

In den Figuren 1 bis 6 sowie 8 und 9 dargestellte Profilleistenanordnungen sind dort insgesamt jeweils mit dem Bezugszeichen 10 bezeichnet. Die Profilleistenanordnungen 10 umfassen jeweils eine Profilleiste 12, die aus einem Profilmaterial 14 hergestellt ist. Bei dem Profilmaterial 14 handelt es sich um einen Kunststoff, beispielsweise um Polyvinylchlorid (PVC), Blends aus Polyvinylchlorid und Poly(acrylnitril-co-butadien-co-styrol) (PVC/ABS) oder insbesondere um Polypropylen (PP).

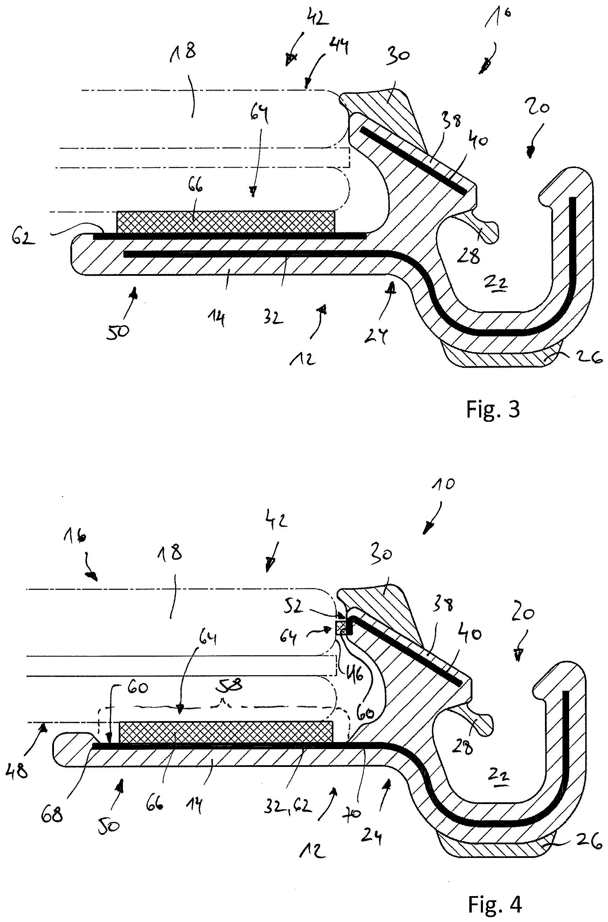

Die Profilleisten 12 weisen jeweils einen ersten Verbindungsbereich 16 zur Verbindung mit einer Windschutzscheibe 18 (vergleiche Figuren 3 und 4) auf, sowie einen zweiten Verbindungsbereich 20 zur Verbindung der Profilleiste 12 mit einem an die Windschutzscheibe 18 angrenzenden Bauteil, insbesondere einer Wasserkastenabdeckung. Solche Bauteile sind beispielsweise aus der EP 2 123 497 A1 bekannt und weisen Rastelemente auf, welche in einem U- oder V-förmigen Aufnahmeraum 22 des zweiten Verbindungsbereichs 20 verrastet werden, um das an die Windschutzscheibe angrenzende Bauteil an der Profilleiste 12 festzulegen.

Zur Verbindung des ersten Verbindungsbereichs 16 und des zweiten Verbindungsbereichs 20 weisen die Profilleisten 12 jeweils einen zentralen Abschnitt 24 auf.

Es ist möglich, dass die Profilleisten 12 zusätzliche Funktionsabschnitte aufweisen, welche aus einem anderen Material hergestellt sind als das Profilmaterial 14. Bei solchen Funktionsabschnitten kann es sich beispielsweise um einen Abstützabschnitt 26 zur Abstützung des zweiten Verbindungsbereichs 20 an einem Fahrzeugbauteil handeln. Es kann sich beispielsweise auch um einen dem zweiten Verbindungsbereich 20 zugeordneten Rastkörper 28 handeln. Es kann sich auch um einen Dichtkörper 30 handeln, der zur dichtenden Anlage gegen eine Windschutzscheibe und gegen das an die Windschutzscheibe angrenzende Bauteil dient.

Es ist möglich und bevorzugt, dass die Profilleisten 12 entlang ihres Verlaufs zwischen dem ersten Verbindungsbereich 16 und dem zweiten Verbindungsbereich 20 mittels mindestens einer Versteifungseinlage 32 verstärkt sind. Bei den Versteifungseinlagen 32 handelt es sich insbesondere um profilierte Flachkörper aus Stahl, einer Stahllegierung, Aluminium oder einer Aluminiumlegierung.

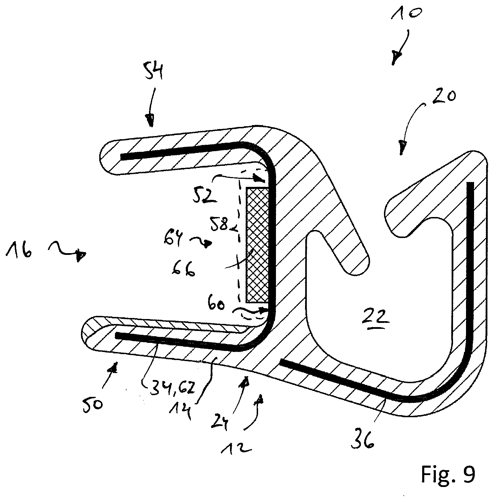

Es ist auch möglich, dass eine Versteifungseinlage nur und ausschließlich jeweils einem Verbindungsbereich 16 bzw. 20 zugeordnet ist, vergleiche Figur 9, dort Versteifungseinlagen 34 und 36.

Darüber hinaus ist es bei Anordnung eines Dichtkörpers 30 bevorzugt, dass ein Trägerabschnitt 38 der Profilleiste 12, welcher den Dichtkörper 30 trägt, ebenfalls mittels einer Versteifungseinlage 40 verstärkt ist.

Die Windschutzscheibe 18 weist einen in ihrer Einbaulage an einem Kraftfahrzeug unteren Randbereich 42 auf, der mit dem ersten Verbindungsbereich 16 der Profilleiste 12 zusammenwirkt. Der Randbereich 42 weist eine Außenseite 44, eine Stirnseite 46 und eine Innenseite 48 auf, vergleiche Figuren 3 und 4.

Der erste Verbindungsbereich 16 der Profilleiste 12 weist zumindest einen unteren Verbindungsabschnitt 50 auf, der mit der Innenseite 48 des Randbereichs 42 der Windschutzscheibe 18 zusammenwirkt. Es ist möglich, dass zusätzlich ein seitlicher Verbindungsabschnitt 52 vorgesehen ist (vergleiche Figuren 4 und 9), der mit der Stirnseite 46 des Randbereichs 42 der Windschutzscheibe 18 zusammenwirkt.

Es kann auch ein oberer Verbindungsabschnitt 54 vorgesehen sein, der mit der Außenseite 44 des Randbereichs 42 der Windschutzscheibe 18 zusammenwirkt, vergleiche Figur 9.

Die Profilleisten 12 weisen in dem ersten Verbindungsbereich 16 einen Oberflächenabschnitt 58 auf, der frei ist von Profilmaterial 14. Der Oberflächenabschnitt 58 wird anstelle des Profilmaterials 14 von einer Oberfläche 60 eines Zusatzelements 62 oder von der Oberfläche einer Beschichtung des Zusatzelements 62 gebildet.

In dem in oder an dem ersten Verbindungsbereich 16 angeordneten Zustand des Randbereichs 42 der Windschutzscheibe 18 ist die Oberfläche 60 dem Randbereich 42 zugewandt. Wenn die Oberfläche 60 an dem unteren Verbindungsabschnitt 50 vorgesehen ist, ist die Oberfläche 60 der Innenseite 48 des Randbereichs 42 der Windschutzscheibe zugewandt (vergleiche Figuren 1 bis 6 und 8). Wenn die Oberfläche 60 an einem seitlichen Verbindungsabschnitt 52 angeordnet ist, ist die Oberfläche 60 der Stirnseite 46 des Randbereichs 42 der Windschutzscheibe 18 zugewandt (vergleiche Figuren 4 und 9). Wenn die Oberfläche 60 an dem oberen Verbindungsabschnitt 54 (vergleiche Fig. 9) angeordnet ist, ist die Oberfläche 60 der Außenseite 44 des Randbereichs 42 der Windschutzscheibe 18 zugewandt.

Bei dem Zusatzelement 62 gemäß Figuren 1 bis 3 handelt es sich um ein Zusatzelement, welches separat zu Versteifungseinlagen 32, 40 der Profilleistenanordnungen 10 bereitgestellt ist und an der Profilleiste 12 zu den Versteifungseinlagen 32, 40 beabstandet angeordnet ist. Dieses Zusatzelement 62 erstreckt sich ausschließlich in dem freien Oberflächenabschnitt 58.

Bei dem Zusatzelement 62 handelt es sich insbesondere um einen ebenen Flachkörper. Der Flachkörper ist aus einem metallischen Material hergestellt, insbesondere aus Stahl, einer Stahllegierung, Aluminium oder einer Aluminiumlegierung. Es kann sein, dass das Zusatzelement 62 selbst die Oberfläche 60 bildet, oder aber eine Beschichtung des Zusatzelements 62.

Für eine stoffschlüssige Verbindung zwischen dem Zusatzelement 62 und dem Randbereich 42 der Windschutzscheibe 18 ist ein Klebeabschnitt 64 vorgesehen, welcher insbesondere durch ein doppelseitiges Klebeband 66 gebildet ist. Das Klebeband 66 weist voneinander abgewandte Klebeseiten auf. Eine erste Klebeseite wirkt mit der Oberfläche 60 des Zusatzelements 62 zusammen, und eine von der ersten Seite abgewandte zweite Klebeseite wirkt mit der Innenseite 48 des Randbereichs 42 der Windschutzscheibe 18 zusammen.

Es ist möglich, dass die Profilleisten 12 keine Versteifungseinlagen 32, 40 aufweisen. Für den Fall, dass mindestens eine Versteifungseinlage 32, 40 vorgesehen ist, ist es bevorzugt, dass eine solche Versteifungseinlage 32 und/oder 40 ein Zusatzelement 62 bildet und dass vorzugsweise die Profilleiste 12 kein separat bereitgestelltes Zusatzelement 62 aufweist. Solche Anordnungen sind in den Figuren 4 bis 6, 8 und 9 dargestellt.

Beispielsweise ist eine Versteifungseinlage 32 vorgesehen, die in das Material 14 der Profilleiste 12 eingebettet ist (vergleiche Fig. 4). In einem Oberflächenabschnitt 58 liegt die Oberfläche 60 der Versteifungseinlage 32 oder einer Beschichtung der Versteifungseinlage 32 frei, sodass die Oberfläche der Versteifungseinlage 32 oder eine Beschichtung der Versteifungseinlage 32 mit einem Klebeabschnitt 64, insbesondere mit einem doppelseitigen Klebeband 66, versehen werden kann.

Es ist bevorzugt, dass ein freies Ende 68 der Versteifungseinlage 32 sowohl auf seiner Unterseite als auch auf seiner Oberseite mit Profilmaterial 14 bedeckt ist und somit zumindest ein Teilbereich der Versteifungseinlage 32 in dem Profilmaterial 14 der Profilleiste 12 verankert ist. Dies gilt in entsprechender Weise für einen dem zweiten Verbindungsbereich 20 zugewandten Abschnitt 70 der Versteifungseinlage 32.

Bei dem in Figur 4 dargestellten Ausführungsbeispiel variiert die Stärke des Profilmaterials 14 entlang des Verlaufs des unteren Verbindungsabschnitts 50 im Querschnitt gesehen.

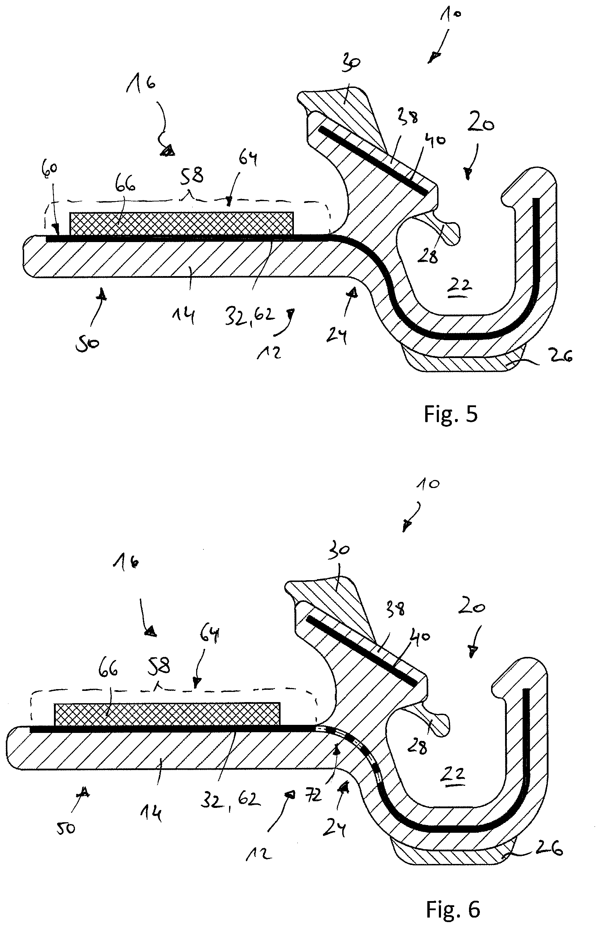

Es ist auch möglich, dass die Materialstärke des unteren Verbindungsabschnitts 50 nicht variiert, wobei gleichzeitig eine Versteifungseinlage 32 als Zusatzelement genutzt wird, vergleiche Figuren 5, 6 und 8.

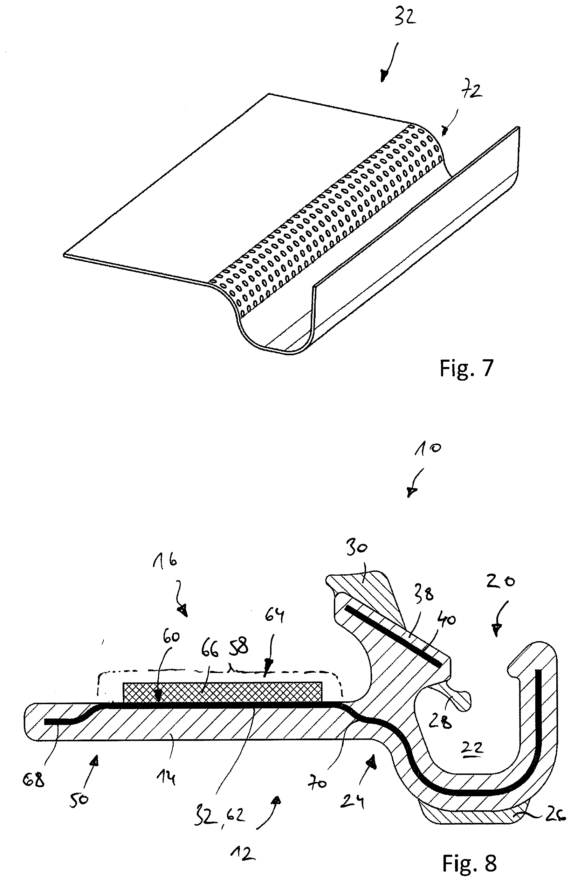

In dem in Figur 5 dargestellten Ausführungsbeispiel erstreckt sich die Versteifungseinlage 32, welche ein Zusatzelement 62 bildet, entlang einer geraden Ebene und ist in diesem Bereich lediglich auf einer Seite mit Profilmaterial 14 bedeckt. Um eine Verankerung der Versteifungseinlage 32 in dem Profilmaterial 14 zu verbessern, kann es vorgesehen sein, dass die Versteifungseinlage 32 eine Perforierung 72 aufweist, wodurch die Möglichkeit geschaffen wird, dass das Profilmaterial 14 die Versteifungseinlage 32 durchdringt, vergleiche Figuren 6 und 7. Vorzugsweise ist die Perforierung 72 dem zentralen Abschnitt 24 der Profilleiste 12 zugeordnet.

Eine weitere bevorzugte Möglichkeit, eine Versteifungseinlage 32, die ein Zusatzelement bildet, in dem Profilmaterial 14 der Profilleiste 12 zu verankern, besteht darin, dass zumindest ein freies Ende 68 und/oder ein dem zweiten Verbindungsbereich 20 zugewandter Abschnitt 70 der Versteifungseinlage 32 sowohl auf der Unterseite als auch auf der Oberseite mit Profilmaterial 14 bedeckt ist oder sind, vergleiche Figur 8. Ein Zusatzelement 62 kann in diesem Fall dadurch geschaffen werden, dass die Versteifungseinlage 32 nicht entlang ihres gesamten Verlaufs vom freien Ende 68 bis hin zum Abschnitt 70 in das Profilmaterial 14 eingebettet ist, sondern in dem Bereich eines freien Oberflächenabschnitts 58 lediglich auf einer Unterseite mit Profilmaterial 14 bedeckt ist. Dies kann beispielsweise dadurch erreicht werden, dass die Versteifungseinlage 32 entlang ihres Verlaufs zwischen dem freien Ende 68 und dem Abschnitt 70 eine Überhöhung aufweist, sodass die der Unterseite gegenüberliegende Oberseite der Versteifungseinlage 32 eine Oberfläche 60 bildet, die von Profilmaterial 14 frei ist. Auf diese Weise bildet die Versteifungseinlage 32 in diesem Bereich ein Zusatzelement 62, welches vorzugsweise zur Anordnung eines doppelseitigen Klebebands 66 dient oder an welchem ein doppelseitiges Klebeband 66 angeklebt ist.

Es ist auch möglich, dass eine Versteifungseinlage 34 entlang der gesamten Erstreckung eines Verbindungsabschnitts 50, 52 und/oder 54 eine von Profilmaterial 14 freie Oberfläche 60 bildet, vergleiche Figur 9. Dort ist beispielhaft der seitliche Verbindungsabschnitt 52 vollständig frei von Profilmaterial 14 und dient zur Anordnung eines Klebeabschnitts 64. In einem solchen Fall ist es bevorzugt, wenn die Versteifungseinlage 34 in mindestens einem angrenzenden Abschnitt der Profilleiste 12 eingebettet ist, beispielsweise in dem unteren Verbindungsabschnitt 50 und/oder in dem oberen Verbindungsabschnitt 54.

## Patentansprüche

1. Profilleistenanordnung (10), umfassend eine aus einem Profilmaterial (14) hergestellte Profilleiste (12) mit einem ersten Verbindungsbereich (16) zur Verbindung mit einem Randbereich (42) einer Windschutzscheibe (18) eines Kraftfahrzeugs und mit einem zweiten Verbindungsbereich (20), der mit einem an die Windschutzscheibe (18) angrenzenden Bauteil in Form einer Wasserkastenabdeckung verbunden wird, wobei der erste Verbindungsbereich (16) mindestens einen von dem Profilmaterial (14) freien Oberflächenabschnitt (58) aufweist, wobei der freie Oberflächenabschnitt (58) dem Randbereich (42) der Windschutzscheibe (18) zugewandt ist und zumindest ein Teilbereich des freien Oberflächenabschnitts (58) von einem Klebeabschnitt (64) in Form eines doppelseitigen Klebebandes (66) überdeckt ist, das zur Klebeverbindung mit dem Randbereich (42) der Windschutzscheibe (18) dient, **dadurch gekennzeichnet, dass** der freie Oberflächenabschnitt (58) des ersten Verbindungsbereichs (16) der Profilleiste (12) durch die Oberfläche (60) eines aus Metall bestehenden Zusatzelements (62) oder durch die Oberfläche einer Beschichtung des Zusatzelements (62) gebildet ist.

2. Profilleistenanordnung (10) nach einem der voranstehenden Ansprüche, **dadurch gekennzeichnet, dass** der erste Verbindungsbereich (16) einen unteren Verbindungsabschnitt (50) aufweist, der mit einer Innenseite (48) des Randbereichs (42) der Windschutzscheibe (18) zusammenwirkt, und/oder dass der erste Verbindungsbereich (16) einen seitlichen Verbindungsabschnitt (52) aufweist, der mit einer Stirnseite (46) des Randbereichs (42) der Windschutzscheibe (18) zusammenwirkt, und/oder dass der erste Verbindungsbereich (16) einen oberen Verbindungsabschnitt (54) aufweist, der mit einer Außenseite (44) des Randbereichs (42) der Windschutzscheibe (18) zusammenwirkt, und dass der mindestens eine freie Oberflächenabschnitt (58) an dem unteren Verbindungsabschnitt (50) und/oder dem seitlichen Verbindungsabschnitt (52) und/oder dem oberen Verbindungsabschnitt (54) angeordnet ist.

3. Profilleistenanordnung (10) nach einem der voranstehenden Ansprüche, **dadurch gekennzeichnet, dass** der zweite Verbindungsbereich (20) einen im Profil U- oder V-förmigen Aufnahmeraum (22) zur Aufnahme eines Rastelements der Wasserkastenabdeckung aufweist.

4. Profilleistenanordnung (10) nach einem der voranstehenden Ansprüche, **dadurch gekennzeichnet, dass** sich das Zusatzelement (62) ausschließlich in dem freien Oberflächenabschnitt (58) erstreckt.

5. Profilleistenanordnung (10) nach einem der Ansprüche 1 bis 3, **dadurch gekennzeichnet, dass** in dem Bereich eines Teilabschnitts des Zusatzelements dieses sowohl auf seiner Unterseite als auch auf seiner Oberseite mit Profilmaterial (14) bedeckt ist.

6. Profilleistenanordnung (10) nach Anspruch 5, **dadurch gekennzeichnet, dass** der Teilabschnitt durch ein freies Ende (68) des Zusatzelements und/oder durch einen dem zweiten Verbindungsbereich (20) zugewandten Abschnitt (70) des Zusatzelements gebildet ist.

7. Profilleistenanordnung (10) nach einem der voranstehenden Ansprüche, **dadurch gekennzeichnet, dass** die Profilleiste (12) einen zentralen Abschnitt (24) aufweist, der den ersten Verbindungsbereich (16) und den zweiten Verbindungsbereich (20) miteinander verbindet, und dass das Zusatzelement im Bereich des zentralen Abschnitts (24) Durchbrüche aufweist, insbesondere in Form einer Perforierung (72).

8. Profilleistenanordnung (10) nach einem der voranstehenden Ansprüche, **dadurch gekennzeichnet, dass** das Zusatzelement durch eine Versteifungseinlage (32, 40) gebildet ist, welche die Profilleiste (12) versteift.

## Claims

1. A profile strip arrangement (10), comprising a profile strip (12) made of a profile material (14), the profile strip (12) having a first connecting area (16) for providing a connection to an edge area (42) of a windshield (18) of a motor vehicle, and having a second connecting area (20) which is connected to a component in the form of a water tray cover that is adjacent to the windshield (18), wherein the first connecting area (16) has at least one free surface section (58) that is free of the profile material (14), wherein the free surface section (58) faces the edge area (42) of the windshield (18) and wherein at least a partial area of the free surface section (58) is covered by an adhesive section (64) in the form of a double-sided adhesive tape (66) which provides an adhesive connection to the edge area (42) of the windshield (18), **characterized in that** the free surface section (58) of the first connecting area (16) of the profile strip (12) is formed by the surface of an additional element (62) made of metal or by a coating of the additional element (62).

2. The profile strip arrangement (10) according to one of the preceding claims, **characterized in that** the first connecting area (16) has a lower connecting section (50) which interacts with an inside (48) of the edge area (42) of the windshield (18), and/or **in that** the first connecting area (16) has a lateral connecting section (52) that interacts with a face (46) of the edge area (42) of the windshield (18), and/or **in that** the first connecting area (16) has an upper connecting section (54) that interacts with an outside (44) of the edge area (42) of the windshield (18), and **in that** the at least one free surface section (58) is arranged on the lower connecting section (50) and/or the lateral connecting section (52) and/or the upper connecting section (54).

3. The profile strip arrangement (10) according to one of the preceding claims, **characterized in that** the second connecting area (20) has a receiving space (22) with a U-shaped or V-shaped profile for purposes of receiving a latching element of the water tray cover.

4. The profile strip arrangement (10) according to one of the preceding claims, **characterized in that** the additional element (62) extends exclusively in the free surface section (58).

5. The profile strip arrangement (10) according to one of claims 1 to 3, **characterized in that**, in a partial section of the additional element, a bottom and a top of the additional element are covered with the profile material (14).

6. The profile strip arrangement (10) according to claim 5, **characterized in that** the partial section is formed by a free end (68) of the additional element and/or by a section (70) of the additional element facing the second connecting area (20).

7. The profile strip arrangement (10) according to one of the preceding claims, **characterized in that** the profile strip (12) has a central section (24) which connects the first connecting area (16) and the second connecting area (20) to each other, and **in that** the additional element has openings, especially in the form of perforations (72), in the area of the central section (24).

8. The profile strip arrangement (10) according to one of the preceding claims, **characterized in that** the additional element is formed by a reinforcement insert (32, 40) that stiffens the profile strip (12).

## Revendications

1. Ensemble de baguette profilée (10) comprenant une baguette profilée (12) fabriquée à partir d'un matériau profilé (14) ayant une première zone de liaison (16) pour liaison à une première zone de bord (42) d'un pare-brise (18) d'un véhicule automobile et ayant une seconde zone de liaison (20), qui est reliée à un composant attenant au pare-brise (18) sous la forme d'un recouvrement de bac à eau, dans lequel la première zone de liaison (16) présente au moins une section de surface supérieure (58) libre du matériau profilé (14), dans lequel la section de surface supérieure libre (58) fait face à la zone de bord (42) du pare-brise (18) et au moins une zone partielle de la section de surface supérieure libre (58) est recouverte d'une section adhésive (64) sous la forme d'un ruban adhésif double face (66) qui sert à la liaison adhésive à la zone de bord (42) du pare-brise (18), **caractérisé en ce que** la section de surface supérieure libre (58) de la première zone de liaison (16) de la baguette profilée (12) est formée par la surface supérieure (60) d'un élément supplémentaire (62) constitué de métal ou par la surface supérieure d'un revêtement de l'élément supplémentaire (62).

2. Ensemble de baguette profilée (10) selon l'une quelconque des revendications précédentes, **caractérisé en ce que** la première zone de liaison (16) comporte une section de liaison inférieure (50) qui coopère avec un côté interne (48) de la zone de bord (42) du pare-brise (18), et/ou **en ce que** la première zone de liaison (16) présente une section de liaison latérale (52) qui coopère avec un côté avant (46) de la zone de bord (42) du pare-brise (18), et/ou **en ce que** la première zone de liaison (16) comporte une section de liaison supérieure (54) qui coopère avec un côté externe (44) de la zone de bord (42) du pare-brise (18), et **en ce que** la au moins une section de surface supérieure libre (58) est agencée au niveau de la section de liaison inférieure (50), et/ou de la section de liaison latérale (52) et/ou de la section de liaison supérieure (54) .

3. Ensemble de baguette profilée (10) selon l'une quelconque des revendications précédentes, **caractérisé en ce que** la seconde zone de liaison (20) présente un espace de réception (22) ayant un profil en forme de U ou de V pour recevoir un élément de verrouillage du recouvrement de bac d'eau.

4. Ensemble de baguette profilée (10) selon l'une quelconque des revendications précédentes, **caractérisé en ce que** l'élément supplémentaire (62) s'étend exclusivement dans la section de surface supérieure libre (58).

5. Ensemble de baguette profilée (10) selon l'une quelconque des revendications 1 à 3, **caractérisé en ce que** dans la zone d'une section partielle de l'élément supplémentaire, celui-ci est recouvert d'un matériau profilé (14) sur son côté inférieur de même que sur son côté supérieur.

6. Ensemble de baguette profilée (10) selon la revendication 5, **caractérisé en ce que** la section partielle est formée par une extrémité libre (68) de l'élément supplémentaire et/ou par une section (70) opposée à la seconde zone de liaison (20) de l'élément supplémentaire.

7. Ensemble de baguette profilée (10) selon l'une quelconque des revendications précédentes, **caractérisé en ce que** la baguette profilée (12) comporte une section centrale (24) qui relie la première zone de liaison (16) et la seconde zone de liaison (20) l'une à l'autre, et **en ce que** l'élément supplémentaire présente un passage dans la zone de la section centrale (24), en particulier sous la forme d'une perforation (72).

8. Ensemble de baguette profilée (10) selon l'une quelconque des revendications précédentes, **caractérisé en ce que** l'élément supplémentaire est formé par un insert de rigidification (32, 40) qui rigidifie la baguette profilée (12) .
